# EUROPÄISCHE PATENTSCHRIFT

(11) **EP 0 637 213 B1**
(45) Veröffentlichungstag und Bekanntmachung des Hinweises auf die Patenterteilung: **23.10.1996**
(21) Anmeldenummer: 94905721.0
(22) Anmeldetag: 27.01.1994
(51) Int. Cl.: A47B 88/00

(54) **BEFESTIGUNGSBESCHLAG FÜR SCHUBLADEN-FRONTBLENDEN**
SECURING SET FOR DRAWER FRONTS
FERRURE DE FIXATION POUR LES PANNEAUX AVANT DE TIROIRS

(30) Priorität: 19.02.1993 DE 4305074
(43) Veröffentlichungstag der Anmeldung: 08.02.1995
(73) Patentinhaber: MEPLA-WERKE LAUTENSCHLÄGER GmbH & Co. KG, D-64354 Reinheim (DE)
(72) Erfinder: LAUTENSCHLÄGER, Horst, D-64354 Reinheim (DE); LAUTENSCHLÄGER, Gerhard, D-64395 Brensbach-Wersau (DE)
(74) Vertreter: Helber, Friedrich G., Dipl.-Ing.
(86) Internationale Anmeldenummer: EP9400232
(87) Internationale Veröffentlichungsnummer: WO9418870

(56) Entgegenhaltungen:
- DE-U- 9 109 024

## Beschreibung

Die Erfindung betrifft einen Beschlag für die verstellbare Befestigung der Frontblende einer Schublade an deren Seitenwänden mit einem an der Frontblende anbringbaren Befestigungsteil und einem lösbar mit dem Befestigungsteil verbindbaren, an der zugehörigen Schubladen-Seitenwand vorgesehenen Halterungsteil, von denen der Befestigungsteil eine im wesentlichen rechtwinklig von der Innenfläche der Frontblende vortretende Befestigungslasche mit parallel zur Schubladen-Seitenwand verlaufenden Flachseiten aufweist, in welcher ein im wesentlichen parallel zur Innenfläche senkrecht verlaufender und am unteren Ende offen mündender Längsschlitz vorgesehen ist, und der Halterungsteil einen von der Außenfläche der Schubladen-Seitenwand vortretenden Halterungszapfen aufweist, dessen Durchmesser etwas kleiner als die in horizontaler Richtung gemessene Breite des Längsschlitzes und dessen über die Außenfläche der Schubladen-Seitenwand vortretende Höhe etwas kleiner als die Dicke der Befestigungslasche ist, wobei in der Stirnfläche des Halterungszapfens eine Gewindebohrung vorgesehen ist, in welche der Schaft einer Befestigungsschraube eingeschraubt ist, die über eine unter ihrem Kopf angeordnete Unterlegplatte in spannende Anlage ihres Kopfs an die seitenwandabgewandte Außenfläche der Befestigungslasche in den Halterungszapfen einschraubbar ist.

Schubladen werden heute an ihren sichtbaren Vorderseiten überwiegend mit Frontblenden versehen, welche den eigentlichen Schubladenkasten in der Höhen- und Breitenabmessung überragen und somit in der ganz in den zugehörigen Möbelkorpus eingeschobenen Stellung - entsprechend aufschlagenden Türflügeln - seitlich und bei der obersten und untersten Schublade eines Schubladen-Schranks auch mit dem überstehenden oberen bzw. unteren Randbereich auf den Stirnflächen der Korpuswände aufliegen. Dabei entsteht das Problem, daß die Frontblenden zu den Frontblenden von in Höhenrichtung oder seitlich benachbarten Schubladen und/oder den Schrank-Seitenwänden oder benachbarten Türflügeln so ausgerichtet werden müssen, daß sie in geschlossenem Zustand eine ästhetisch befriedigende exakte Ausrichtung haben. Solange die Frontblenden auf der eigentlichen Schubladen-Vorderwand aufgesetzt und mit dieser verschraubt wurden, war eine solche Ausrichtung relativ einfach dadurch möglich, daß die Bohrung für die von der Schubladen-Innenseite aus durch die Schubladen-Vorderwand in die Frontblende eingeschraubten Befestigungsschrauben in der Vorderwand größer als der Schaft der Befestigungsschrauben bemessen wurde, so daß ein allseitiges Verschieben der Frontblende in dem durch das Übermaß der Bohrungen vorgegebenen Rahmen bei gelockerten Befestigungsschrauben möglich war. Durch Anziehen der Befestigungsschrauben nach der erfolgten Ausrichtung wurden die Frontblenden dann auf der Schubladen-Vorderwand fixiert. In neuerer Zeit werden Schubladen aber zunehmend ohne feste Vorderwand hergestellt, d.h. die Frontblenden stellen gleichzeitig die Vorderwand dar und müssen deshalb mit dem Schubladenkasten starr verbindbar sein, um die Schublade in ihrem vorderen Bereich zu stabilisieren. Andererseits muß aber trotzdem die geschilderte Ausrichtung möglich sein. Hierfür sind Befestigungsbeschläge verschiedener Art entwickelt worden, die zum Teil zusätzlich die Aufgabe der Halterung des Vorderendes der Laufschiene der die Schublade ausziehbar am Schrankkorpus lagernden Ausziehführung übernehmen (DE-A- 36 32 442). Diese Befestigungsbeschläge sind unter dem Schubladenboden auf der Innenfläche der den Boden nach unten überragenden Seitenwand angeordnet. Zur hinreichend starren Befestigung der Frontblende an den Seitenwänden müssen dann aber - zumindest bei Schubladen großer senkrechter Höhe - noch zusätzliche Befestigungsmittel nach Art von Eckverbindern oberhalb des Bodenniveaus vorgesehen werden, welche ebenfalls eine Einstellung der Frontblende erlauben müssen und außerdem optisch möglichst wenig in Erscheinung treten sollen. Bei in neuerer Zeit für bestimmte Anwendungsfällen verwendeten Schubladen mit Seitenwänden aus Kunststoff- oder Metall-Hohlkammerprofilen wurden deshalb im Innern der Seitenwand-Hohlprofile angeordnete Befestigungsbeschläge für Frontplatten (z.B. EP-A- 0 267 477) verwendet, bei denen an der Frontblende ein Halterungsteil befestigt ist, der in eine Blattfeder einhängbar ist, die ihrerseits in Höhen- und Einschubrichtung der Schublade einstellbar in einem im Innern des Hohlprofils angeordneten Tragteil angeordnet ist. Für die Querverstellung der Frontblende ist der Halterungsteil außerdem selbst noch einmal so unterteilt, daß diese Teile relativ zueinander in Querrichtung verstellbar sind. Diese bekannten Beschläge haben einen relativ komplexen Aufbau und sind dementsprechend aufwendig und teuer in der Herstellung.

Neben Schubladen mit Seitenwänden aus den erwähnten Hohlkammerprofilen werden - unter anderem auch aus Kostengründen - solche aus einwandigen stranggepreßten Aluminium-Profilen oder auch aus Metallprofilen aus Stahlblech für die Schubladenherstellung verwendet, bei denen eine verdeckte Anordnung des Frontblenden-Befestigungsbesohlages in hohlen Innern nicht möglich ist.

Ein relevanter Stand der Technik ist aus der DE-A- 9109024 bekannt.

Für diese Anwendungsfälle ist ein Befestigungsbeschlag der eingangs erwähnten Art entwickelt worden (DE-A- 40 26 407), dessen Abmessungen relativ gering sind und der eine Einstellung der Frontblende relativ zur Schubladen-Seitenwand in horizontaler und - im Bedarfsfall - auch in senkrechter Richtung ermöglicht. Damit die Frontblende nach der Erstmontage bzw. einem Verstellvorgang beim Anziehen der Befestigungsschraube stramm an die vorderen Stirnkanten der Schubladen-Seitenwände und des Schubladen-Bodens angezogen wird, ist die frontblendenabgewandte Begrenzung des Längsschlitzes in der Befestigungslasche im Übergangsbereich zur seitenwandabgewandten Flachseite mit einer schrägen Übergangsfläche versehen, auf welcher die unter dem Kopf der Befestigungsschraube vorgesehene Unterlegscheibe abgestützt ist. Beim Anziehen der Befestigungsschraube nach einer erfolgten Einstellung wird deshalb über die Keilwirkung dieser Übergangsfläche die Befestigungslasche und somit die Frontblende gegen die zugehörige Seitenwand gezogen. Die Anzugskraft wird also auf der frontblendenabgewandten Seite der Befestigungslasche erzeugt und über die in ihrem Querschnitt relativ geringe, den Längsschlitz in der Befestigungslasche oben abschließenden Steg-Querschnitt übertragen. Somit entsteht in diesem Steg-Querschnitt ein Biegemoment, welches den Längsschlitz aufzuweiten sucht. Im Extremfall kann die Lasche - bei zu starkem Anziehen und Vorschädigungen - sogar im Steg-Querschnitt aufbrechen.

Der Erfindung liegt demgegenüber die Aufgabe zugrunde, einen Befestigungsbeschlag für die Frontblenden von Schubladen anzugeben, der einerseits die starre, aber in den erforderlichen Koordinatenrichtungen einstellbare Befestigung der Frontblenden an einwandigen Schubladen-Seitenwänden, und zwar sowohl dünnwandigen Seitenwänden aus Metall als auch hölzernen Seitenwänden ermöglicht und ohne Vergrößerung der Abmessung und Komplizierung des Aufbaus gegenüber dem bekannten Beschlag eine höhere Festigkeit erbringt. Darüber hinaus soll außerdem die Höheneinstellung der Frontblende relativ zu den Seitenwänden bzw. dem Boden der Schublade nicht nur durch die Klemmwirkung der Befestigungsschraube, sondern zusätzlich durch formschlüssige Anlage von Beschlagteilen aneinander sichergestellbar sein.

Ausgehend von einem Beschlag der eingangs erwähnten Art wird diese Aufgabe erfindungsgemäß dadurch gelöst, daß die Befestigungslasche in ihrem zwischen dem Längsschlitz und der Frontblende gelegenen Bereich eine langgestreckte Vertiefung mit einer parallel zum Längsschlitz und in einer schubladenbodenparallelen Ebene vom Boden der Vertiefung aus unter einer Neigung von der Frontblende weg verlaufende Schrägfläche aufweist, an welcher ein komplementär schräg abgekanteter, streifenförmiger Randbereich der Unterlegplatte abgestützt ist. Die die Frontblende an die zugehörige Seitenwand heranziehende Kraft wird nunmehr also in dem zwischen dem Längsschlitz und der Frontblende liegenden Bereich durch die beim Anziehen der Befestigungsschraube erzeugte Keilwirkung zwischen der Schrägfläche und dem streifenförmigen Randbereich der Unterlegplatte erzeugt, so daß also der Querschnitt des den Längsschlitz oben abschließenden Steges der Befestigungslasche vollständig entlastet ist.

Damit die erwähnte Keilwirkung zwischen der Schrägfläche der Vertiefung in der Befestigungslasche und dem schräg abgekanteten Randbereich der Unterlegplatte entstehen kann, ist der von der Längsmittelebene des Längsschlitzes der Befestigungslasche zum Vertiefungsboden abgewandten oberen Rand der Schrägfläche gemessene horizontale Abstand 'A' etwas größer als der von der Mittelachse der Befestigungssohrauben-Durchlaßöffnung der Unterlegplatte bis zu deren schräg abgekantetem streifenförmigen Randbereich gemessene Abstand 'a', wobei dieser Abstand 'a' an der der Befestigungslasche zugewandten Unterseite der Unterlegplatte gemessen ist.

Zur Sicherung der Höheneinstellung der Frontblende ist in erfindungsgemäßer Weiterbildung in dem den Längsschlitz am oberen Ende abschließenden Bereich der Befestigungslasche eine von der oberen Begrenzungsfläche bis in den Längsschlitz durchgehende Gewindebohrung vorgesehen, in welche der mit komplementärem Gegengewinde versehene Schaft einer mit ihrem längsschlitzzugewandten Ende am Halterungszapfen des Halterungsteils abgestützten Höhenverstellschraube angreift. Durch Verdrehen der Höhenverstellschraube im Uhrzeiger- bzw. Gegenuhrzeigersinn wird das freie Ende des Schafts der Befestigungsschraube mehr oder weniger in den Längsschlitz hinein bzw. aus ihm herausgeschraubt und bildet dann einen Anschlag, an welchem der Halterungszapfen zur Anlage kommt. Ein versehentliches Absinken der Frontblende bei Lockerung der Befestigungsschraube ist deshalb nicht möglich.

Um die korrekte Ausrichtung des schräg abgekanteten Randbereichs der Unterlegplatte in bezug auf die Schrägfläche in der Vertiefung der Befestigungslasche bei der Montage der Frontblende an der Seitenwand, d.h. beim Einführen des Halterungszapfens des Halterungsteils in den Längsschlitz der Befestigungslasche sicherzustellen, ist es zweckmäßig, wenn die Unterlegplatte in bezug auf ihre Ausrichtung zum Halterungszapfen unverdrehbar, in Richtung von dessen Längsmittelachse jedoch verschieblich am Halterungsteil bzw. der Seitenwand gehalten ist.

Die Unterlegplatte hat vorzugsweise eine im wesentlichen rechteckige oder quadratische Form, an deren einer Seite der streifenförmige, schräg abgekantete Randbereich angesetzt ist, wobei dann an der hieran rechtwinklig anschließenden, in der bestimmungsgemäßen Befestigungsstellung zum unteren offenen Ende des Längsschlitzes gewandten Seite der Unterlegplatte eine zur Seitenwand vorspringende Führungslasche angesetzt ist, welche längsverschieblich in eine sie seitlich umgreifende Öffnung oder Vertiefung in der Seitenwand bzw. dem Halterungsteil eingreift.

Vorzugsweise greift die Führungslasche in eine in der Umfangsfläche des Halterungszapfens eingearbeitete Längsnut.

Um die Befestigungslasche auch bei nur geringfügig gelokkerter Befestigungsschraube auf dem Halterungszapfen montieren zu können, empfiehlt sich eine Ausgestaltung, bei der die Vertiefung an ihrem unteren Ende offen in der unteren Begrenzungsfläche der Befestigungslasche mündet.

Die Befestigungslasche ist zweckmäßig - wie beim bekannten Beschlag - an einem Befestigungsflansch angesetzt, an welchem wenigstens eine Durchgangsöffnung für jeweils eine in die Frontblende einschraubbare Befestigungsschraube vorgesehen ist, wobei die Durchgangsöffnung(en) zweckmäßig die Form eines in horizontaler Richtung verlaufenden Langloch hat bzw. haben, wodurch eine Querverstellung der Frontblende in dem durch die Länge der Langlöcher vorgegebenen Bereich möglich ist.

Die möglichst starre und belastbare Befestigung des Halterungsteils an der Schubladen-Seitenwand wird vorzugsweise dadurch erreicht, daß der Halterungszapfen eine komplementäre Öffnung in der Schubladen-Seitenwand durchsetzt, wobei am seitenwandseitigen Ende des Halterungszapfens dann vorzugsweise ein im Durchmesser vergrößerter Flansch vorgesehen ist, der in der bestimmungsgemäßen Befestigungsstellung des Halterungsteils an der Seitenwand also auf der Innenfläche der zugehörigen Schubladen-Seitenwand aufliegt und den Halterungszapfen gegen Herausziehen aus der zugehörigen Öffnung in der Seitenwand sichert. Die Festlegung des Halterungsteils in entgegengesetzter Richtung, d.h. gegen ein Herausdrücken des Halterungszapfens in Richtung des Schubladeninnern, kann entweder durch eine entsprechend stramme Passung des Halterungszapfens in der zugeordneten Öffnung der Schubladen-Seitenwand oder - bei Schubladen-Seitenwänden aus einem Metallprofil - auch durch eine zusätzliche Verbindungstechnik, wie Verschweißen, Löten oder auch Verstemmen, erfolgen.

Nach der erfolgten lagegerechten Befestigung der Frontblende am Schubladenkasten wird dann zweckmäßig auf den Beschlag eine Abdeckkappe aufgesetzt. Diese Abdeckkappe kann aus dünnem Kunststoff hergestellt und auf den Beschlag aufrastbar ausgebildet sein, da sie keine Befestigungskräfte übertragen muß.

Die Erfindung ist in der folgenden Beschreibung eines Ausführungsbeispiels in Verbindung mit der Zeichnung näher erläutert, und zwar zeigt:
- Fig. 1: eine perspektivische Explosionsansicht, in welcher ein Eckabschnitt der Frontblende und der Vorderteil der zugehörigen Schubladen-Seitenwand mit dem jeweils zugeordneten Beschlagteil gezeigt sind;
- Fig. 2: eine Schnittansicht des montierten Beschlagteils, gesehen in Richtung der Pfeile 2-2 in Fig. 1;
- Fig. 3: eine Ansicht des an der Schubladen-Seitenwand montierten Beschlages, gesehen in der durch die Pfeile 3-3 in Fig. 1 veranschaulichten Blickrichtung;
- Fig. 4: eine Schnittansicht entlang der Pfeile 4-4 in Fig. 2; und
- Fig. 5: eine perspektivische Ansicht der die Spannkraft der Befestigungsschraube auf die Befestigungslasche übertragenden Unterlegplatte.

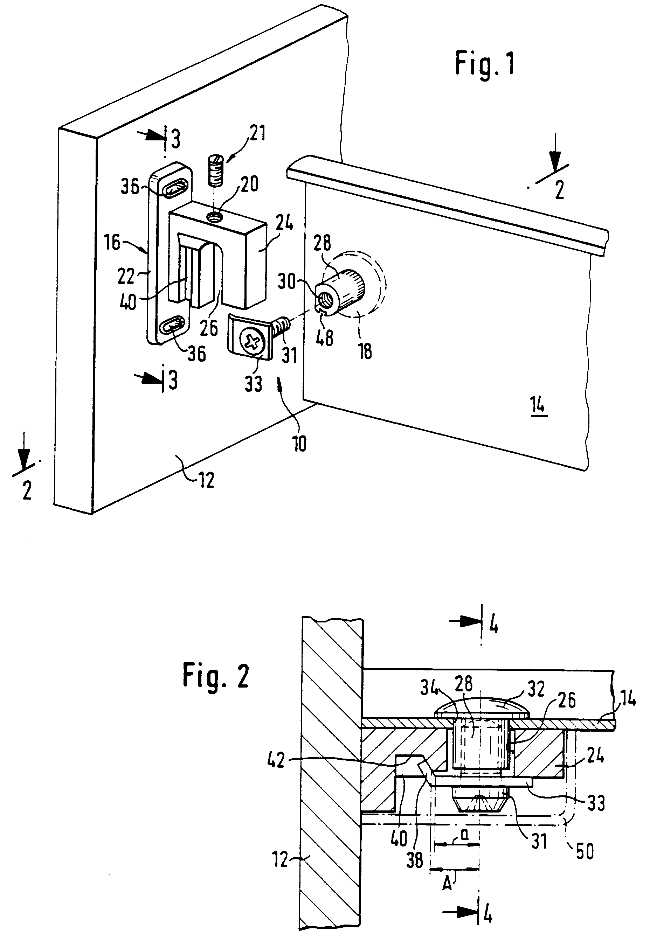

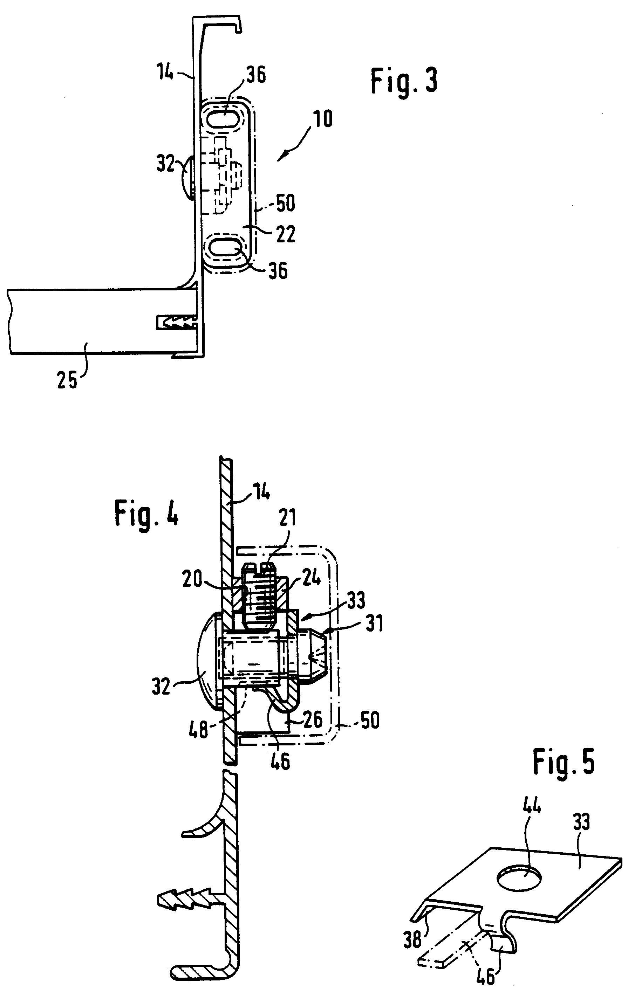

In Figur 1 ist ein in seiner Gesamtheit mit 10 bezeichnetes Ausführungsbeispiel eines erfindungsgemäßen Befestigungsbeschlages gezeigt, wobei von der an der Schublade zu befestigenden Frontblende 12 nur deren Eckbereich und von der Schublade nur der Anschlußbereich der - in diesem Fall von einem einwandigen Metallprofil gebildeten - Schubladen-Seitenwand 14 dargestellt sind. Der Beschlag 10 weist einen an der Innenfläche der zu befestigenden Frontblende 12 befestigbaren Befestigungsteil 16 und einen an der Schubladen-Seitenwand 14 befestigbaren Halterungsteil 18 auf. Der Befestigungsteil 16 setzt sich aus einem mittels - nicht gezeigter - Befestigungsschrauben auf der Frontblenden-Innenfläche aufschraubbaren Befestigungsflansch 22 und einer etwa mittig und rechtwinklig zur Innenfläche vorstehenden flachen Befestigungslasche 24 zusammen. Die Anbringung des Befestigungsteils 16 an der Innenfläche der Frontblende erfolgt so, daß die Flachseite der Befestigungslasche 24 rechtwinklig zur Frontblenden-Innenfläche und zum Schubladen-Boden 25 (Fig. 3) verläuft. Die Befestigungslasche 24 weist einen an einer Seite offenen, in der unteren Begrenzungskante mündenden und in parallelem Abstand zur Blenden-Innenfläche verlaufenden Längsschlitz 26 auf, welcher über einen von der Seitenwand 14 vorstehenden Halterungszapfen 28 des Halterungsteils 18 geschoben wird. Im Halterungszapfen 28 ist eine in dessen freier Stirnfläche mündende Gewindebohrung 30 vorgesehen, in welche der mit komplementärem Gegengewinde versehene Schaft einer Befestigungsschraube 31 einschraubbar ist, unter deren Kopf eine in der Draufsicht im wesentlichen quadratische oder rechteckige Unterlegplatte 33 unverlierbar, jedoch drehbar gehalten ist.

Der Halterungsteil 18 weist an seiner anderen, d.h. der Mündung der Gewindebohrung 30 gegenüberliegenden, Stirnfläche einen einstückig angeformten Flansch 32 (Fig. 2 bis 4) auf. Die Befestigung des Halterungsteils an bzw. in der Seitenwand 14 erfolgt in einer durchgehenden Öffnung 34 in der Seitenwand, deren Querschnitt dem Querschnitt des Halterungszapfens 28 entsprechend bemessen ist, wobei die Passung zwischen dem Halterungszapfen 28 und der Öffnung 34 so gewählt ist, daß der in die Öffnung eingepreßte Halterungszapfen in der Öffnung 34 durch eine Preßpassung gehalten ist. Eine zusätzliche Befestigung des Halterungsteils 18 durch Verschweißung oder Verlötung des Flanschs 32 mit der Seitenwand 14 oder auch eine Verstemmung des Halterungszapfens 28 mit dem umgebenden Material der Schubladen-Seitenwand ist möglich, jedoch in der Regel nicht erforderlich.

Der Befestigungsflansch 22 des Befestigungsteils 16 weist in seinem oberen und unteren, die Befestigungslasche 20 überragenden Endbereich in horizontaler Richtung verlaufende (angesenkte) Langlöcher 36 auf, welche eine Befestigung des Befestigungsteils in unterschiedlichen Horizontalstellungen auf der Innenfläche der Frontblende 12 ermöglichen. Bei gelockerten Befestigungsschrauben 20 ist also eine Querverschiebung der Frontblende 12 relativ zum Befestigungsteil 16 und somit eine Einstellung der Frontblende in horizontaler Richtung möglich.

Die hierzu rechtwinklige Einstellung der Frontblende in senkrechter Richtung erfolgt durch Festlegung der Befestigungslasche 24 in entsprechend wählbaren Höhenstellungen auf dem Halterungszapfen 28, dessen von der Seitenwand 14 vorstehende Länge etwas kleiner als die Dicke der Befestigungslasche gewählt ist, so daß die über die Unterlegplatte 33 beim Anziehen der Befestigungsschraube 31 auf die schubladenabgewandte Außenfläche der Befestigungslasche 24 abgestützte Anzugskraft der Befestigungsschraube 31 ein festes Andrücken der Befestigungslasche 24 an der Schubladen-Seitenwand 14 zur Folge hat. Um eine gewählte Höheneinstellung des Halterungszapfens 18 im Längsschlitz 26 auch dann sicherzustellen, wenn die Befestigungsschraube 31 sich im Laufe der Zeit ungewollt lockern sollte, ist in dem den Längsschlitz 26 am oberen Ende abschließenden Stegbereich eine von der oberen Begrenzungsfläche der Befestigungslasche bis in den Längsschlitz hindurchgeführte Gewindebohrung 20 vorgesehen, in welche ein mit komplementärem Gegengewinde versehener Gewindestift 21 einschraubbar ist. Je nach der gewählten Einschraubtiefe des Gewindestifts 21 liegt dessen vordere Stirnfläche innerhalb der Gewindebohrung 20 oder tritt aus ihr in den Längsschlitz 26 vor und bildet dann eine Anschlagfläche für den Halterungszapfen 28. Der Gewindestift 21 bzw. seine freie Stirnfläche bildet also einen in Längsrichtung des Längsschlitzes 26 verstellbaren Anschlag, über den eine gewählte Höheneinstellung der Frontblende 12 fixierbar ist.

Vom frontblendenseitigen Rand der Unterlegplatte 33 ist ein schmaler Randbereich 38 schräg in Richtung zur Seitenwand 14 zur Frontblende 12 abgekantet. Dieser Randbereich 38 greift in eine parallel zum Längsschlitz 26 verlaufende langgestreckte Vertiefung 40 in der seitenwandabgewandten Flachseite der Befestigungslasche 24. Die Vertiefung 40 mündet an ihrem unteren Ende - entsprechend dem Längsschlitz 26 - offen. Die längsschlitzseitige Begrenzungswand der Vertiefung 40 wird von einer Schrägfläche 42 gebildet, welche eine zur Neigung des Randbereichs 38 der Unterlegplatte 33 komplementäre Neigung aufweist. Es ist nunmehr klar, daß beim Anziehen der Befestigungsschraube 31 die Unterseite der Unterlegplatte 33 gegen die ihr gegenüberliegende Flachseite der Befestigungslasche 24 gedrängt wird, wobei gleichzeitig die der Befestigungslasche 24 zugewandte Seite des schräg abgekanteten Randbereichs 38 an der Schrägfläche 42 der Vertiefung 40 zur Anlage kommt. Durch entsprechende Wahl der Abmessungen der Unterlegplatte 33 und des Abstands der Schrägfläche 42 von der Längsmittelebene des Längsschlitzes 26 erfolgt die Anlage des Randbereichs 38 an der Schrägfläche 42 bevor die Unterseite des ebenflächigen Teils der Unterlegplatte 33 auf der im Bereich zwischen dem Langloch 26 und der Vertiefung 40 etwas zurückversetzten Flachseite der Befestigungslasche 24 zur Anlage kommt. Dadurch ist es möglich, daß die vom Kopf der Befestigungsschraube 21 über die Unterlegplatte 33 auf die Befestigungslasche 24 ausgeübte Spannkraft zwischen dem schräg abgekanteten Randbereich 38 und der Schrägfläche 42 eine Keilwirkung hervorruft, welche die Befestigungslasche nicht nur fest gegen die Seitenwand 14 drängt, sondern zusätzlich eine Spannkomponente erzeugt, welche die Frontblende 12 gegen die vordere Stirnwand der Seitenwand 14 zieht.

Die Bemessung der Unterlegplatte 33 in bezug auf den Abstand der oberen Kante der Schrägfläche 42, welche diesen Anzug bewirkt, ist so gewählt, daß der von der Längsmittelebene des Längsschlitzes 26 zum oberen Rand der Schrägfläche 42 gewählte Abstand 'A' etwas größer als der von der Mittelachse der Befestigungsöffnung 44 der Unterlegplatte an deren Unterseite bis zur Knickkante des Randbereichs 38 gemessene Abstand 'a' ist (Fig. 2).

Die Unterlegplatte 33 ist - wie oben erwähnt - unter dem Kopf der Befestigungsschraube 31 drehbar und in Längsrichtung unverschieblich gehalten, damit die Befestigungsschraube anziehbar ist, ohne daß sich die Unterlegplatte mitdreht. Diese drehbare Halterung auf der Befestigungsschraube hat aber den Nachteil, daß sich die Unterlegplatte bei der Montage der Frontblende 12 an einer Seitenwand beim Anstoßen an der Befestigungslasche aus der erforderlichen Ausrichtstellung des abgekanteten Randbereichs 38 mit der Schrägfläche 42 verdrehen kann, so daß dann ein Einfädeln des Randbereichs 38 in die Vertiefung 40 erst möglich ist, wenn die Unterlegplatte von Hand in die erforderliche Ausrichtlage zurückgedreht worden ist. Bei dem in den Zeichnungsfiguren dargestellten Ausführungsbeispiel ist deshalb zusätzlich eine Verdrehsicherung für die Unterlegplatte 33 relativ zur Seitenwand verwirklicht, welche darin besteht, daß am in der bestimmungsgemäßen Befestigungsstellung des Beschlages unteren horizontalen Rand der Unterlegplatte 33 eine Führungslasche 46 angesetzt ist, welche in Richtung zur Seitenwand und nach innen in Richtung zum Halterungszapfen 28 weist und passend in eine in der Umfangsfläche des Halterungszapfens 22 vorgesehene Längsnut 48 eingreift. Dadurch wird sichergestellt, daß die Unterlegplatte 33 zwar auf dem Schaft der Befestigungsschraube 31 verdrehbar, jedoch relativ zum Halterungszapfen 28 unverdrehbar, dabei jedoch in Längsrichtung verschieblich in der Nut 48 geführt ist.

Die Führungslasche 46 wird am einfachsten durch entsprechendes Abbiegen eines einstückig am Zuschnitt der Unterlegplatte angeschnittenen Lappens hergestellt, wie er in Figur 5 zusätzlich strichpunktiert in der Ursprungslage dargestellt ist.

In den Figuren 2 bis 4 ist dann noch erkennbar, daß der Beschlag 10 nach einer korrekten Ausrichtung und Befestigung der Frontblende 12 an der Schubladen-Seitenwand 14 durch eine - in den erwähnten Figuren strichpunktiert dargestellte - Abdeckkappe 50 abgedeckt ist. Diese Abdeckkappe übernimmt selbst keinerlei Befestigungsaufgaben, sondern dient lediglich dazu, den Beschlag zu verdecken. Sie kann daher ohne weiteres preiswert aus Kunststoff hergestellt werden, wobei ihre Befestigung durch Aufrasten auf dem Befestigungsflansch 22 des Befestigungsteils 16 möglich ist.

## Patentansprüche

1. Beschlag (10) für die verstellbare Befestigung der Frontblende (12) einer Schublade an deren Seitenwänden (14) mit einem an der Frontblende anbringbaren Befestigungsteil (16) und einem lösbar mit dem Befestigungsteil (16) verbindbaren, an der zugehörigen Schubladen-Seitenwand vorgesehenen Halterungsteil (18), von denen der Befestigungsteil (16) eine im wesentlichen rechtwinklig von der Innenfläche der Frontblende (12) vortretende Befestigungslasche (24) mit parallel zur Schubladen-Seitenwand (14) verlaufenden Flachseiten aufweist, in welcher ein im wesentlichen parallel zur Innenfläche senkrecht verlaufender und am unteren Ende offen mündender Längsschlitz (26) vorgesehen ist, und der Halterungsteil (18) einen von der Außenfläche der Schubladen-Seitenwand (14) vortretenden Halterungszapfen (28) aufweist, dessen Durchmesser etwas kleiner als die in horizontaler Richtung gemessene Breite des Längsschlitzes (26) und dessen über die Außenfläche der Schubladen-Seitenwand (14) vortretende Höhe etwas kleiner als die Dicke der Befestigungslasche (24) ist, wobei in der Stirnfläche des Halterungszapfens (28) eine Gewindebohrung (30) vorgesehen ist, in welche der Schaft einer Befestigungsschraube (31) eingeschraubt ist, die über eine unter ihrem Kopf angeordnete Unterlegplatte (33) in spannende Anlage ihres Kopfs an die seitenwandabgewandte Außenfläche der Befestigungslasche (24) in den Halterungszapfen (28) einschraubbar ist,
**dadurch gekennzeichnet,**
daß die Befestigungslasche (24) in ihrem zwischen dem Längsschlitz (26) und der Frontblende (12) gelegenen Bereich eine langgestreckte Vertiefung (40) mit einer parallel zum Längsschlitz (26) und in einer schubladenbodenparallelen Ebene vom Boden der Vertiefung aus unter einer Neigung von der Frontblende (12) weg verlaufende Schrägfläche (42) aufweist, an welcher ein komplementär schräg abgekanteter, streifenförmiger Randbereich (38) der Unterlegplatte (33) abgestützt ist.

2. Beschlag nach Anspruch 1, dadurch gekennzeichnet, daß der von der Längsmittelebene des Längsschlitzes (26) der Befestigungslasche (24) zum vertiefungsbodenabgewandten oberen Rand der Schrägfläche (42) gemessene horizontale Abstand (A) etwas größer als der von der Mittelachse der Befestigungssohrauben-Durchlassöffnung (44) der Unterlegplatte (33) an deren Unterseite bis zu deren schräg abgekantetem, streifenförmigem Randbereich (38) gemessene Abstand (a) ist.

3. Beschlag nach Anspruch 1 oder 2, dadurch gekennzeichnet, daß in dem den Längsschlitz (26) am oberen Ende abschließenden Bereich der Befestigungslasche (24) eine von der oberen Begrenzungsfläche bis in den Längsschlitz (26) durchgehende Gewindebohrung (20) vorgesehen ist, in welche der mit komplementärem Gegengewinde versehene Schaft einer mit ihrem längsschlitzzugewandten Ende am Halterungszapfen (28) des Halterungsteils (18) abgestützten Höhenverstellschraube (21) angreift.

4. Beschlag nach einem der Ansprüche 1 bis 3, dadurch gekennzeichnet, daß die Unterlegplatte (33) in Bezug auf ihre Ausrichtung zum Halterungszapfen (28) unverdrehbar in Richtung von dessen Längsmittelachse jedoch verschieblich am Halterungsteil (18) bzw. der Seitenwand (14) gehalten ist.

5. Beschlag nach Anspruch 4, dadurch gekennzeichnet, daß die Unterlegplatte (33) eine im wesentlichen rechteckige oder quadratische Form hat, an deren einer Seite der streifenförmige schräg abgekantete Randbereich (38) angesetzt ist, und daß an der hieran rechtwinklig anschließenden, in der bestimmungsgemäßen Befestigungsstellung zum unteren offenen Ende des Längsschlitzes (26) gewandten Seite der Unterlegplatte (33) eine zur Seitenwand (14) vorspringende Führunglasche (46) angesetzt ist, welche längsverschieblich in eine sie seitlich umgreifende Öffnung oder Vertiefung in der Seitenwand (14) bzw. dem Halterungsteil (18) eingreift.

6. Beschlag nach Anspruch 5, dadurch gekennzeichnet, daß die Führungslasche (46) in eine in der Umfangsfläche des Halterungszapfens (28) eingearbeitete Längsnut (48) eingreift.

7. Beschlag nach einem der Ansprüche 1 bis 6, dadurch gekennzeichnet, daß die Vertiefung (40) an ihrem unteren Ende offen in der unteren Begrenzungsfläche der Befestigungslasche (24) mündet.

8. Beschlag nach einem der Ansprüche 1 bis 7, dadurch gekennzeichnet, daß die Befestigungslasche (24) von einem Befestigungsflansch (22) vortritt, in welchem wenigstens eine Durchgangsöffnung für jeweils eine in der Frontblende einschraubbare Befestigungsschraube vorgesehen ist.

9. Beschlag nach Anspruch 8, dadurch gekennzeichnet, daß die Durchgangsöffnung(en) die Form eines in horizontaler Richtung verlaufenden Langlochs (36) hat bzw. haben.

10. Beschlag nach einem der Ansprüche 1 bis 9, dadurch gekennzeichnet, daß der Halterungszapfen (28) eine komplementäre Öffnung (34) in der Schubladen-Seitenwand (14) durchsetzt.

11. Beschlag nach Anspruch 10, dadurch gekennzeichnet, daß der Halterungsteil (18) einen am seitenwandseitigen Ende des Halterungszapfens (28) vorgesehenen, im Durchmesser vergrößerten Flansch (32) aufweist.

12. Beschlag nach einem der Ansprüche 1 bis 11, gekennzeichnet durch eine nach der Herstellung der Befestigungsverbindung zwischen dem Befestigungs- und dem Halterungsteil (16; 18) aufsetzbare, den Beschlag (10) übergreifende Abdeckkappe (50).

## Claims

1. A hardware device (10) for the adjustable fastening of a drawer front (12) to its sides (14), with a mounting member (16) attachable to the drawer front and a stud member (18), which can be releasably joined to the mounting member (16) and is provided on the corresponding drawer side, the mounting part (16) of which has a fastening lug (24) with flat sides running parallel to the drawer side (14) and projecting substantially at a right angle from the inside surface of the drawer front, in which an elongated slot (26) running vertically and substantially parallel to the inside surface and open at the bottom end is provided, and the stud member (18) has a mounting stud (28) projecting from the outside surface of the drawer side (14) and having a diameter slightly smaller than the width of the elongated slot (26) measured horizontally, and whose height projecting beyond the outside surface of the drawer side (14) is slightly smaller than the thickness of the fastening lug (24), a threaded bore (30) being provided in the front end of the mounting stud (28), into which the shaft of a fastening screw (31) is driven, which can be driven into the mounting stud (28) through a washer (33) disposed under its head into gripping contact of its head with the outside surface of the fastening lug (28), characterized in that the fastening lug (24), in its area between the longitudinal slot (26) and the drawer front (12), has an elongated groove (40) with a ramp (42) running parallel to the longitudinal slot (26) and, in a plane parallel to the bottom of the drawer, sloping from the bottom of the groove away from the drawer front (12), at which ramp (42) an elongate marginal area (38) of the washer (33), bent at a complementary angle, is supported.

2. The hardware device of claim 1, characterized in that the horizontal distance (A), measured from the longitudinal central plane of the elongated slot (26) of the mounting lug (24) to the upper edge of the ramp surface (42) remote from the groove bottom, is slightly greater than the distance (a), measured from the central axis of the screw hole (44) in the washer (33) at its bottom to its bent elongate marginal edge area (38).

3. The hardware device of claim 1 or 2, characterized in that a tapped hole (20) is provided in the area of the mounting lug (24) terminating the longitudinal slot (26) at the upper end and extends from the upper boundary surface to the elongated slot (26), which tapped hole (20) is engaged by the shaft, provided with a complementary head, of a height-adjusting screw (21), which is supported with its end facing the elongated slot at the mounting stud (28) of the stud member (18).

4. The hardware device of one of claims 1 to 3, characterized in that the washer (33), with respect to its alignment with the stud (28), is held against rotation in the direction of its longitudinal central axis, but displaceably on the stud member (18) or drawer side (14).

5. The hardware device of claim 4, characterized in that the washer (33) has a substantially rectangular or square shape to the one side of which the elongate, bent edge region (38) is fastened, and that at the side of the washer (33), which adjoins the edge region (38) at right angles and in the properly mounted position faces the lower open end of the slot (26), a guiding tongue (46) is provided, which protrudes towards the drawer side (14) and engages lengthwise displaceably an opening or recess in the drawer side (14) or stud member (18) reaching around it laterally.

6. The hardware device of claim 5, characterized in that the guiding tongue (46) engages a longitudinal groove (48) created in the circumferential surface of the mounting stud (28).

7. The hardware device of claims 1 to 6, characterized in that the groove (40) ends open at its lower end in the lower boundary surface of the mounting lug (24).

8. The hardware device of one of claims 1 to 7, characterized in that the mounting lug (24) protrudes from a mounting flange (22), in which at least one through opening is provided for a mounting screw that can be driven into the drawer front.

9. The hardware device of claim 8, characterized in that the through opening(s) has/have the shape of an elongated hole (36) running horizontally.

10. The hardware device of one of claims 1 to 9, characterized in that the mounting stud (28) passes through a complementary opening (34) in the drawer side (14).

11. The hardware device of claim 10, characterized in that the mounting member (18) has a flange (32) of enlarged diameter provided on the drawer-side end of the mounting stud (28).

12. The hardware device of one of claims 1 to 11, characterized by a cap (50), which covers the hardware device (10) and can be put in place after the fastening connection between the mounting member and the stud (16; 18) has been produced.

## Revendications

1. Ferrure (10) pour la fixation réglable du panneau avant (12) d'un tiroir aux parois latérales (14) de celui-ci, comprenant un élément de fixation (16) se montant sur le panneau avant et un élément de support (18) prévu sur la paroi latérale associée du tiroir et se joignant de manière séparable à l'élément de fixation (16), l'élément de fixation (16) présentant une patte de fixation (24) qui fait saillie sensiblement à angle droit de la face intérieure du panneau avant (12), a des côtés plats s'étendant parallèlement à la paroi latérale (14) du tiroir et dans laquelle est prévue une fente longitudinale (26) s'étendant verticalement sensiblement parallèlement à la face intérieure et débouchant à son extrémité inférieure, et l'élément de support (18) présentant un tenon de support (28) qui fait saillie de la face extérieure de la paroi latérale (14) du tiroir et dont le diamètre est un peu inférieur à la largeur mesurée dans la direction horizontale de la fente longitudinale (26) et la hauteur saillant de la face extérieure de la paroi latérale (14) du tiroir est un peu inférieure à l'épaisseur de la patte de fixation (24), dans la face de bout du tenon de support (28) étant prévu un trou taraudé (30) dans lequel est vissée la tige d'une vis de fixation (31) qui est vissée dans le tenon de support (28) avec intercalation d'une plaquette de serrage (33) placée sous sa tête avec appui serrant de cette tête sur la face extérieure opposée à la paroi latérale du tiroir de la patte de fixation (24),
caractérisée par le fait
que la patte de fixation (24) présente dans sa zone située entre la fente longitudinale (26) et le panneau avant (12) un creux allongé (40) ayant une surface inclinée (42) qui s'étend parallèlement à la fente longitudinale (26) et en s'éloignant du panneau avant (12) avec une inclinaison à partir du fond du creux dans un plan parallèle au fond du tiroir et sur laquelle s'appuie une partie de bord en forme de bande rabattue obliquement de façon complémentaire (38) de la plaquette de serrage (33).

2. Ferrure selon la revendication 1, caractérisée par le fait que la distance horizontale (A) mesurée du plan médian longitudinal de la fente longitudinale (26) de la patte de fixation (24) au bord supérieur opposé au fond du creux de la surface inclinée (42) est un peu supérieure à la distance (a) mesurée de l'axe de l'ouverture (44) de passage de la vis de fixation faite dans la plaquette de serrage (33), sur la face inférieure de celle-ci, à la partie de bord en forme de bande rabattue obliquement (38) de celle-ci.

3. Ferrure selon l'une des revendications 1 et 2, caractérisée par le fait que, dans la zone de la patte de fixation (24) qui ferme la fente longitudinale (26) à son extrémité supérieure, est prévu un trou taraudé (20) qui traverse cette zone de la surface limite supérieure à la fente longitudinale (26) et dans lequel est engagée la tige pourvue d'un filetage complémentaire d'une vis de réglage en hauteur (21) dont l'extrémité dirigée vers la fente longitudinale s'appuie sur le tenon de support (28) de l'élément de support (18).

4. Ferrure selon l'une des revendications 1 à 3, caractérisée par le fait que la plaquette de serrage (33) est montée sur l'élément de support (18) ou sur la paroi latérale (14) de façon à ne pas pouvoir tourner en ce qui concerne son orientation par rapport au tenon de support (28), mais être mobile dans la direction de l'axe longitudinal de celui-ci.

5. Ferrure selon la revendication 4, caractérisée par le fait que la plaquette de serrage (33) a une forme sensiblement rectangulaire ou carrée et la partie de bord en forme de bande rabattue obliquement (38) est faite sur un côté du rectangle ou du carré, et que sur le côté de la plaquette de serrage (33) adjacent à ce côté et dirigé, dans la position de fixation prévue, vers l'extrémité inférieure ouverte de la fente longitudinale (26) est faite une languette de guidage (46) qui fait saillie vers la paroi latérale (14) et s'engage, de manière mobile longitudinalement, dans une ouverture ou un creux l'enserrant latéralement fait dans la paroi latérale (14) ou dans l'élément de support (18).

6. Ferrure selon la revendication 5, caractérisée par le fait que la languette de guidage (46) s'engage dans une rainure longitudinale (48) faite dans la surface latérale du tenon de support (28).

7. Ferrure selon l'une des revendications 1 à 6, caractérisée par le fait que le creux (40) débouche à son extrémité inférieure sur la face limite inférieure de la patte de fixation (24).

8. Ferrure selon l'une des revendications 1 à 7, caractérisée par le fait que la patte de fixation (24) fait saillie d'une bride de fixation (22) dans laquelle est prévue au moins une ouverture pour le passage d'une vis de fixation se vissant dans le panneau avant.

9. Ferrure selon la revendication 8, caractérisée par le fait que l'ouverture ou les ouvertures de passage a ou ont la forme d'un trou oblong (36) s'étendant horizontalement.

10. Ferrure selon l'une des revendications 1 à 9, caractérisée par le fait que le tenon de support (28) passe par une ouverture complémentaire (34) faite dans la paroi latérale (14) du tiroir.

11. Ferrure selon la revendication 10, caractérisée par le fait que l'élément de support (18) présente une bride (32) de plus grand diamètre prévue à l'extrémité du tenon de support (28) située du côté de la paroi latérale.

12. Ferrure selon l'une des revendications 1 à 11, caractérisée par un chapeau (50) qui la couvre et peut être monté, après la réalisation de l'assemblage de fixation entre l'élément de fixation (16) et l'élément de support (18)..
